# EUROPÄISCHE PATENTSCHRIFT

(11) **EP 2 497 872 B1**
(45) Veröffentlichungstag und Bekanntmachung des Hinweises auf die Patenterteilung: **08.04.2015**
(21) Anmeldenummer: 12157509.6
(22) Anmeldetag: 29.02.2012
(51) Int. Cl.: E04B 2/96, F21S 9/02

(54) **Fassadensystem mit einem Notlichtsystem zum Bereitstellen einer Notlichtversorgung**
Facade system with an emergency lighting system for providing a supply of emergency light
Système de façade avec système lumineux de secours destiné à la préparation d'une alimentation lumineuse de secours

(30) Priorität: 09.03.2011 DE 102011005287
(43) Veröffentlichungstag der Anmeldung: 12.09.2012
(73) Patentinhaber: Zumtobel Lighting GmbH, 6850 Dornbirn (AT)
(72) Erfinder: Clauss, Bernd, 6800 Feldkirch (AT)
(74) Vertreter: Thun, Clemens

(56) Entgegenhaltungen:
- EP-A1- 2 023 037
- DE-A1-102005 001 613
- DE-A1-102005 032 656
- DE-U1-202007 002 898
- GB-A- 2 453 540

## Beschreibung

Die vorliegende Erfindung betrifft ein Notlichtsystem, welches dazu vorgesehen ist, eine Notlichtversorgung in Räumen oder Gängen eines Gebäudes bereitzustellen.

Aus Sicherheitsgründen sind Notlichtsysteme, welche im Falle eines Notzustandes eine gewisse Grundbeleuchtung sicherstellen, in großen Gebäuden unerlässlich. Im Falle eines Stromausfalls oder eines gravierenderen Notfalles dienen derartige Systeme dazu, Fluchtwege für sich in dem Gebäude befindende Personen in ausreichender Weise auszuleuchten, so dass diese ggf. ohne Probleme das Gebäude verlassen können. Derartige Systeme weisen also zumindest eine eigenständige Stromversorgung auf bzw. eine Stromversorgung, die im Falle einer Betriebsstörung oder eines Notfalls unabhängig von der allgemeinen Stromversorgung die Leuchten mit Energie versorgt.

Üblicherweise werden für die Notlichtversorgung Leuchten verwendet, welche nicht für die allgemeine Beleuchtung vorgesehen sind. Es handelt sich also um eher unscheinbare Leuchten, welche in unauffälliger Weise in die Gebäudestruktur integriert werden sollen, gleichzeitig allerdings in zuverlässiger Weise im Bedarfsfall die Notlichtversorgung zur Verfügung stellen. Es kommen dementsprechend beispielsweise oftmals Strahler zum Einsatz, welche an bestimmten Positionen angeordnet und derart ausgebildet sind, dass sie einen größeren Bereich ausleuchten können. Die Anzahl der erforderlichen Notlicht-Leuchten kann hierdurch reduziert werden, so dass diese das gesamte Erscheinungsbild nicht bzw. nur unwesentlich beeinträchtigen.

Aus der DE 10 2005 032 656 A1 ist eine aus Leuchtmitteln bestehende Beleuchtungseinrichtung für Gebäude bekannt. Die Beleuchtungseinrichtung ist für Fassadenstrukturen konzipiert, die Pfosten und Riegeln umfassen. Die Leuchtmittel sind dabei an der dem Gebäude zugewandten Seite der Pfosten angeordnet.

Aus der DE 10 2005 001 613 A1 ist eine Brandschutzwand bekannt, die Pfosten und Riegel sowie Brandschutzgläser umfasst. Innerhalb von Hohlräumen in den Pfosten kann ein Elektroinstallationsgerät oder dergleichen eingesetzt sein.

Der vorliegenden Erfindung liegt die Aufgabe zu Grunde, eine alternative Möglichkeit zu Realisierung eines Notlichtsystems zur Verfügung zu stellen. Einerseits soll in zuverlässiger Weise das Bereitstellen eines Notlichts realisiert werden, andererseits sollen die erforderlichen Leuchten möglichst unauffällig in das Gebäude integriert werden.

Die Aufgabe wird durch die in den unabhängigen Ansprüchen definierte Erfindung gelöst. Vorteilhafte Weiterbildungen der Erfindung sind Gegenstand der abhängigen Ansprüche.

Die erfindungsgemäße Lösung beruht auf dem Gedanken, dass gewünschte Notlichtsystem in ein übliches Fassadensystem zum Verkleiden eines Gebäudes zu integrieren. Hierzu wird ein Fassadensystem zum Verkleiden eines Gebäudes mit einer aus mehreren Profilelementen gebildete Tragstruktur sowie von der Tragstruktur gehaltenen plattenförmigen Fassadenelementen vorgeschlagen, wobei erfindungsgemäß vorgesehen ist, dass an der dem Gebäude zugewandten Seite der Tragstruktur des Fassadensystems Leuchtelemente angeordnet sind.

Die erfindungsgemäße Lösung gestattet es, in fassadennahen Gängen oder Fluren in einfacher Weise ein Notlicht zu realisieren, wobei sich die hierzu verwendeten Leuchtelemente unauffällig in die vorhandene Fassadenstruktur einfügen. Das erfindungsgemäße Notlichtsystem gewährleistet also in zuverlässiger Weise das zur Verfügung stellen eines Notlichts, ist allerdings weitestgehend unauffällig und beeinträchtig deshalb das Erscheinungsbild des Gebäudes nicht. Durch vorteilhafte Maßnahmen, die nachfolgend näher beschrieben werden, besteht die Möglichkeit, das Notlichtsystem in handelsübliche Fassadensysteme zu integrieren, ohne dass diese in spezieller Weise angepasst werden müssten.

Vorzugsweise sind die Leuchtelemente an der Oberfläche der Profilelemente der Tragstruktur angeordnet. Mittel zum Ansteuern und/oder zur Stromversorgung der Leuchtelemente hingegen sind in den Profilelementen selbst angeordnet, so dass für einen Betrachter lediglich die Leuchtelemente selbst erkennbar sind. Die Mittel zur Stromversorgung umfassen Akkumulatoren, die im Bedarfsfall die Leuchtelemente mit Energie versorgen. An der den Leuchtelementen gegenüberliegenden Außenseite der Tragstruktur sind Solarpaneele zur Stromversorgung der Leuchtelemente angeordnet. Hierdurch kann ein äußerst energieeffizientes Notlichtsystem geschaffen werden. Weiterhin verlaufen Leitungen zum Verbinden der Solarpaneele mit den Akkumulatoren durch die Tragstruktur des Fassadensystems.

Die Leuchtelemente weisen vorzugsweise eine im Wesentlichen punktförmige Lichtquelle auf, die insbesondere durch eine LED-Lichtquelle realisiert werden kann. Vorzugsweise ist dieser Lichtquelle eine Optik zugeordnet, welche eine stark asymmetrische Lichtverteilung bewirkt. Mit Hilfe dieser Optik wird das Licht in Längsrichtung eines Ganges beispielsweise sehr stark verteilt, um einen größeren Bereich auszuleuchten, in einer Richtung senkrecht hierzu hingegen erfolgt die Lichtabgabe eher gebündelt. Hierdurch wird das von den Lichtquellen abgegebene Licht in effektiver Weise zur Ausleuchtung von Fluchtwegen oder dergleichen genutzt.

Vorzugsweise sind Leuchtelemente in regelmäßigen Abständen an dem Fassadensystem angeordnet. Auch längere Bereiche können hierdurch in effektiver Weise ausgeleuchtet werden.

Nachfolgend soll die Erfindung anhand der beiliegenden Zeichnung näher erläutert werden. Es zeigen:
- Fig. 1: ein Anwendungsbeispiel eines in ein Versorgungssystem erfindungsgemäß integrierten Notlichtsystems;
- Fig. 2: die Innenansicht eines Ausschnitts eines erfindungsgemäß ausgestalteten Fassadensystems;
- Fig. 3: die Außenansicht des erfindungsgemäß ausgestaltenden Fassadensystems, und
- Fig. 4: eine Schnittdarstellung, durch welche die Anordnung der Leuchte sowie der zugehörigen Mittel zur Stromversorgung an dem Fassadensystem verdeutlicht wird.

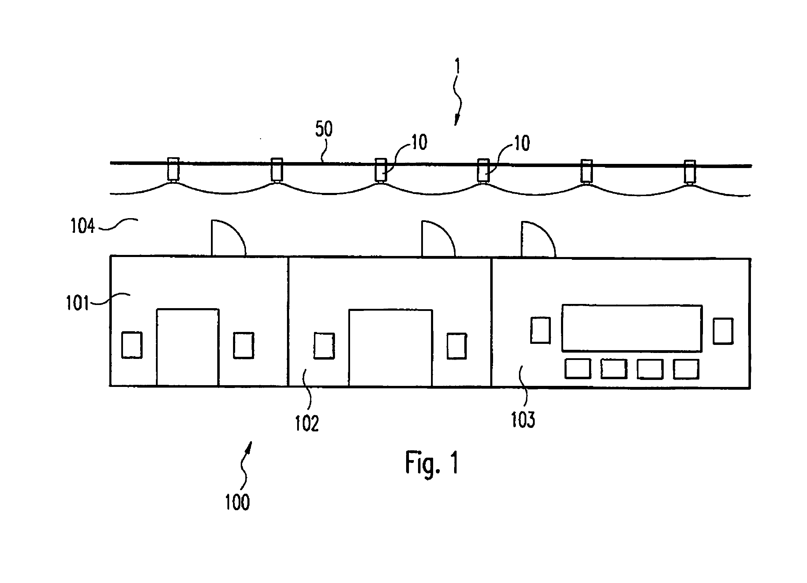

Fig. 1 zeigt als beispielhaftes Anwendungsbeispiel der vorliegenden Erfindung den Ausschnitt eines Stockwerks eines Gebäudes 100. In dem Gebäude sind mehrere Räume vorgesehen, bei denen es sich beispielsweise um Büros 101, 102 und/oder Besprechungszimmer 103 handeln kann. Diese verschiedenen Räume 101, 102, 103 sind über einen Flur 104 miteinander verbunden, der an der den Räumen gegenüberliegenden Seite durch die Außenfassade 50 des Gebäudes 100 begrenzt wird.

Der Flur 104 stellt im vorliegenden Fall einen Fluchtweg für in den Räumen 101 bis 103 befindliche Personen dar, falls ein Notfall eintreten sollte. Um den Personen ein zuverlässiges Verlassen des Gebäudes 100 zu ermöglichen, sollte im Notfall der Flur 104 auch in geeigneter Weise beleuchtet werden, was mit Hilfe eines erfindungsgemäßen Notlichtsystems 1 erfolgt. Dieses besteht aus mehreren einzelnen Leuchten 10, welche in regelmäßigen Abständen angeordnet sind und den Flur 104 über seine gesamte Länge ausleuchten sollen.

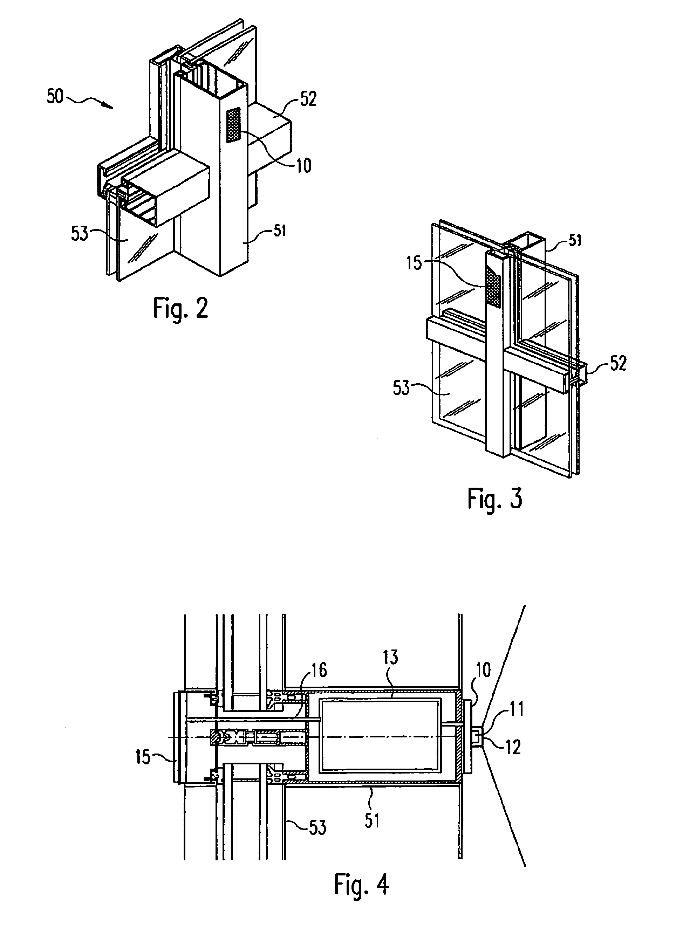

Im Prinzip sind derartige Notlichtsystems bereits bekannt. Erfindungsgemäß wird nunmehr allerdings vorgeschlagen, das Notlichtsystem 1 in das Fassadensystem 50 des Gebäudes 100 zu integrieren. Hierzu wird das Fassadensystem 50 in spezieller Weise ausgestaltet bzw. modifiziert, was nachfolgend anhand der Figuren 2 bis 4 näher erläutert werden soll.

Das ausschnittsweise in Figur 2 dargestellte Fassadensystem 50 besteht zunächst aus vertikal angeordneten Pfosten 51 und senkrecht dazu bzw. horizontal ausgerichteten sogenannten Riegeln 52. Bei diesen Pfosten 51 und Riegeln 52 handelt es sich um Profilelemente, welche zu einer gerüstartigen Tragstruktur zusammengefügt werden. Diese Tragstruktur dient dazu, plattenförmige Fassadenelemente 53 zu halten, welche letztendlich die Außenfassade des Gebäudes 100 bilden. Bei diesen plattenförmigen Fassadenelementen 53 kann es sich um Glasscheiben oder auch um Platten aus einem anderen Material handeln. Diese Elemente 53 können durchsichtig, lediglich teillichtdurchlässig oder auch vollständig undurchsichtig sein.

Grundsätzlich sind derartige Fassadensysteme 50 bereits bekannt. Die erfindungsgemäße Neuerung besteht nunmehr darin, dass an der Tragstruktur des Systems 50 Leuchten zur Realisierung des Notlichtsystems 1 angeordnet werden. Im dargestellten Ausführungsbeispiel sind insbesondere an der dem Gebäude zugewandten Seite der Pfosten 51 Leuchtelemente 10 angeordnet, welche jeweils eine Notleuchte bilden. Selbstverständlich wäre es auch denkbar, die Leuchtelemente 10 an der Oberfläche der Riegel 52 anzuordnen.

Die Leuchtelemente 10 weisen - wie in Figur 4 dargestellt ist - eine im Wesentlichen punktförmige Lichtquelle auf, die insbesondere durch eine LED 11 realisiert sein kann. Vorzugsweise ist dieser LED 11 dann eine schematisch dargestellte Optik 12 zugeordnet, über welche die Lichtabgabe in gewünschter Weise beeinflusst werden kann. Insbesondere ist hierbei vorgesehen, dass die Optik 12, die durch Linsen und/oder Reflektoren gebildet sein kann, das von der LED 11 abgegebene Licht derart verteilt, dass dieses in horizontaler Richtung, also in Längsrichtung des Flurs bzw. Ganges 104 breit verteilt wird. Wie der Darstellung in Fig. 1 entnommen werden kann, kann deshalb durch eine regelmäßige Anordnung entsprechender Notleuchten 10 der Gang 104 über seine gesamte Länge hinweg ausgeleuchtet werden. In vertikaler Richtung hingegen wird das von der LED 11 abgegebene Licht durch die Optik 12 vorzugsweise eher gebündelt, um dieses konzentriert auf den Boden des Ganges 104 zu richten. Hier wäre eine breite Verteilung eher unerwünscht, da einerseits das Licht der LEDs 11 nicht ausreichend effektiv genutzt wird, andererseits sogar die Gefahr besteht, dass Personen geblendet werden.

Die Mittel zum Betreiben der Notlichtleuchte 10 sind vorzugsweise innerhalb der Profilelemente 51, 52 der Tragstruktur angeordnet. Bei diesen Mitteln kann es sich beispielsweise um eine Batterie bzw. eine Akkumulator 13 handeln, der im Falle eines Ausfalls der allgemeinen Stromversorgung die Notlichtleuchte 10 mit der erforderlichen Energie versorgt. Über durch die Profilelemente 51, 52 verlaufende Leitungen kann dann eine entsprechende Aktivierung der Leuchten bzw. des gesamten Systems von einer Zentrale aus erfolgen, falls ein Notzustand detektiert wurde.

Üblicherweise weisen die Profilelemente 51, 52 zum Bilden des Fassadensystems 50 eine Breite von etwa 50 mm auf. Die in die Profilelemente 51, 52 integrierten Mittel zum Betreiben der Leuchten 10 sind dementsprechend vorzugsweise derart dimensioniert, dass sie ohne Probleme innerhalb der Profilelemente 51, 52 angeordnet werden können. Die Batterie bzw. der Akkumulator 13 weist dementsprechend vorzugsweise eine Breite von weniger als 45 mm auf.

Eine weitere Verbesserung des Notlichtsystems kann ferner dadurch erfolgen, dass - wie in Figur 3 dargestellt - an der gegenüberliegenden Seite der Tragstruktur Solarelemente 15 angeordnet werden. Über diese können die Batterien bzw. Akkumulatoren 13 aufgeladen werden, so dass bei einem Ausfall der allgemeinen Stromversorgung in jedem Fall für einen bestimmten Zeitraum ausreichend Energie zum Betreiben des Notlichtsystems zur Verfügung steht. Die Leitungen 16 zum Verbinden der Solarpaneele 15 mit den zugehörigen Akkumulatoren 13 verlaufen wiederum durch die Tragstruktur des Fassadensystems 50, wobei vorzugsweise jedem Leuchtelement 10 mit Akkumulator 13 jeweils ein eigenes Solarpaneel 15 zugeordnet ist.

Letztendlich wird also durch die vorliegende Erfindung eine Möglichkeit geschaffen, Notlichtsysteme in einfacher und unauffälliger Weise in Fassadensystems zu integrieren. Durch die vorgeschlagenen Maßnahmen wird das zuverlässige zur Verfügung stellen eines Notlichts gewährleistet, wobei allerdings die zum Einsatz kommenden Leuchten das Erscheinungsbild des Gebäudes nur unwesentlich bzw. gar nicht beeinträchtigen.

## Patentansprüche

1. Fassadensystem (50) zum Verkleiden eines Gebäudes (100) mit einer aus mehreren Profilelementen (51, 52) gebildeten Tragstruktur sowie von der Tragstruktur gehaltenen plattenförmigen Fassadenelementen (53),
wobei an der dem Gebäude (100) zugewandten Seite der Tragstruktur Leuchtelemente (10) angeordnet sind und
wobei die Leuchtelemente (10) an der Oberfläche der Profilelemente (51, 52) der Tragstruktur angeordnet sind,
**dadurch gekennzeichnet,**
**dass** Mittel zum Ansteuern und/oder zur Stromversorgung der Leuchtelemente (10) in den Profilelementen (51, 52) angeordnet sind,
wobei die Mittel zur Stromversorgung Akkumulatoren (13) umfassen,
wobei an der den Leuchtelementen (10) gegenüberliegenden Außenseite der Tragstruktur Solarpaneele (15) zur Stromversorgung der Leuchtelemente (10) angeordnet sind und
wobei Leitungen (16) zum Verbinden der Solarpaneele (15) mit den Akkumulatoren (13) durch die Tragstruktur des Fassadensystems verlaufen.

2. Fassadensystem nach Anspruch 1,
**dadurch gekennzeichnet,**
**dass** die Leuchtelemente (10) eine im Wesentlichen punktförmige Lichtquelle, insbesondere eine LED-Lichtquelle (11) aufweisen.

3. Fassadensystem nach Anspruch 2,
**dadurch gekennzeichnet,**
dass der Lichtquelle eine Optik (12) zugeordnet ist, welche dazu ausgebildet ist, das Licht in einer Richtung breitstrahlend zu verteilen.

4. Fassadensystem nach einem der vorherigen Ansprüche,
**dadurch gekennzeichnet,**
dass die Leuchtelemente (10) in regelmäßigen Abständen angeordnet sind.

5. Notlichtsystem (1) zum Bereitstellen einer Notlichtversorgung in Räumen oder Gängen eines Gebäudes (100),
wobei das Notlichtsystem (1) mehrere Leuchtelemente (10) aufweist, welche in regelmäßigen Abständen angeordnet sind,
**dadurch gekennzeichnet,**
dass die Leuchtelemente (10) an der Tragstruktur eines Fassadensystems (50) zum Verkleiden des Gebäudes (100) nach einem der vorhergehenden Ansprüche angeordnet sind.

## Claims

1. A façade system (50) for cladding a building (100) having a supporting structure formed from a plurality of profiled elements (51, 52) and also plate-shaped façade elements (53) held by the supporting structure, wherein arranged on the side of the supporting structure facing towards the building (100) there are luminous elements (10), and
wherein the luminous elements (10) are arranged on the surface of the profiled elements (51, 52) of the supporting structure,
**characterised in that**
means for activating and/or for supplying current to the luminous elements (10) are arranged in the profiled elements (51, 52),
wherein the means for supplying current comprise accumulators (13),
wherein arranged on the outside of the supporting structure lying opposite the luminous elements (10) there are solar panels (15) for supplying current to the luminous elements (10), and
wherein leads (16) for connecting the solar panels (15) to the accumulators (13) extend through the supporting structure of the façade system.

2. A façade system according to claim 1,
**characterised in that**
the luminous elements (10) have a substantially punctiform light source, in particular an LED light source (11).

3. A façade system according to claim 2,
**characterised in that**
associated with the light source there is an optical system (12) which is configured to distribute the light in a direction over a wide angle.

4. A façade system according to one of the previous claims,
**characterised in that**
the luminous elements (10) are arranged at regular intervals.

5. An emergency light system (1) for providing an emergency light supply in rooms or corridors of a building (100),
wherein the emergency light system (1) has a plurality of luminous elements (10) which are arranged at regular intervals,
**characterised in that**
the luminous elements (10) are arranged on the supporting structure of a façade system (50) for cladding the building (100) in accordance with one of the preceding claims.

## Revendications

1. Système de façade (50) pour le revêtement d'un bâtiment (100) avec une structure porteuse formée de plusieurs éléments profilés (51, 52) ainsi que des éléments de façade (53) en forme de plaque maintenus par la structure porteuse, des éléments de lampe (10) étant agencés sur le côté tourné vers le bâtiment (100) de la structure porteuse et
les éléments de lampe (10) étant agencés sur la surface des éléments profilés (51, 52) de la structure porteuse,
**caractérisé en ce que**
des moyens pour la commande et/ou l'alimentation électrique des éléments de lampe (10) sont agencés dans les éléments profilés (51, 52),
les moyens pour l'alimentation électrique comprenant des accumulateurs (13),
des panneaux solaires (15) pour l'alimentation électrique des éléments de lampe (10) étant agencés sur le côté extérieur opposé aux éléments de lampe (10) de la structure porteuse et
des câbles (16) pour la liaison des panneaux solaires (15) avec les accumulateurs (13) s'étendant au travers de la structure porteuse du système de façade.

2. Système de façade selon la revendication 1,
**caractérisé en ce que**
les éléments de lampe (10) présentent une source de lumière sensiblement ponctuelle, en particulier une source de lumière à LED (11).

3. Système de façade selon la revendication 2,
**caractérisé en ce que**
une optique (12) est associée à la source de lumière, laquelle est réalisée afin de diffuser en largeur la lumière dans une direction.

4. Système de façade selon l'une quelconque des revendications précédentes,
**caractérisé en ce que**
les éléments de lampe (10) sont agencés à intervalles réguliers.

5. Système lumineux de secours (1) pour la mise à disposition d'une alimentation lumineuse de secours dans des pièces ou couloirs d'un bâtiment (100),
le système lumineux de secours (1) présentant plusieurs éléments de lampe (10) qui sont agencés à intervalles réguliers,
**caractérisé en ce que**
les éléments de lampe (10) sont agencés sur la structure porteuse d'un système de façade (50) pour le revêtement du bâtiment (100) selon l'une quelconque des revendications précédentes.
